## Europäisches Patentamt

## European Patent Office

## Office européen des brevets

(19)

(11) Veröffentlichungsnummer: **0 151 709**

**B1**

(12) # EUROPÄISCHE PATENTSCHRIFT

(45) Veröffentlichungstag der Patentschrift:
12.07.89

(51) Int. Cl.⁴: **B 23 B 31/00**

(21) Anmeldenummer: **84114243.3**

(22) Anmeldetag: **26.11.84**

(54) Einrichtung zur Überwachung des Betriebszustandes eines Kraftspannfutters.

(30) Priorität: **28.01.84 DE 3402989**

(43) Veröffentlichungstag der Anmeldung:
**21.08.85 Patentblatt 85/34**

(45) Bekanntmachung des Hinweises auf die Patenterteilung:
**12.07.89 Patentblatt 89/28**

(84) Benannte Vertragsstaaten:
**DE FR GB IT SE**

(56) Entgegenhaltungen:
**DE-A-1 752 226**
**DE-A-2 632 228**
**DE-A-2 813 832**
**DE-A-3 012 049**
**GB-A-575 112**

(73) Patentinhaber: **SMW Schneider & Weisshaupt GmbH, Wiesentalstrasse 28, D-7996 Meckenbeuren (DE)**

(72) Erfinder: **Hiestand, Karl, Mühlweg 2, D-7798 Pfullendorf (DE)**

(74) Vertreter: **Engelhardt, Guido, Dipl.- Ing., Montafonstrasse 35 Postfach 1350, D-7990 Friedrichshafen 1 (DE)**

EP 0 151 709 B1

**Beschreibung**

Die Erfindung bezieht sich auf eine Einrichtung zur Überwachung des Betriebszustandes eines Kraftspannfutters bei Stillstand, das einen Futterkörper und in diesen in radial gerichteten Nuten verschiebbar geführte angetriebene Grundbacken aufweist, auf denen Spannbacken befestigt oder Spannkassetten auswechselbar gehalten sind.

Durch die DE-A-1 752 266 ist ein Kraftspannfutter dieser Art mit auf den Grundbacken befestigten Spannbacken und durch die DE-A-2 813 832 ein Kraftspannfutter mit auf den Grundbacken auswechselbar gehaltenen Spannkassetten bekannt. Einrichtungen, mittels denen die Anlage der Spannbacken bzw. der Spannkassetten an den Grundbacken und/oder des zwischen diesen einzuspannenden Werkstückes überprüft werden kann, sind bei diesen Kraftspannfuttern jedoch nicht vorgesehen.

Aufgabe der Erfindung ist es daher, eine Überwachungseinrichtung zu schaffen, mittels der es in sehr einfacher Weise möglich ist, bei einem Kraftspannfutter festzustellen, und zwar bei dessen Stillstand, ob die Spannbacken, die Spannkassetten und/oder das einzuspannende Werkstück plan an den diesen jeweils zugeordneten Anlageflächen anliegen, so daß vor Inbetriebnahme der mit einem derartigen Kraftspannfutter bestückten Werkzeugmaschine entsprechende Korrekturen vorzunehmen sind und somit gegebenenfalls Unfälle, da Spannbacken, Spannkassetten und/oder das Werkstück nicht exakt gehalten sind und somit bei Rotation herausgeschleudert würden, vermieden werden. Der Bauaufwand, um dies zu erreichen, soll gering gehalten werden, des weiteren soll die Handhabung einfach sein, vor allem aber soll eine stets betriebssichere und zuverlässige Kontrolle der zu überwachenden Teile bewerkstelligt werden können und auch eine vorteilhafte Anwendbarkeit bei Kraftspannfuttern mit selbsttätig zu wechselnden Spannkassetten möglich sein.

Gemäß der Erfindung wird dies dadurch erreicht, daß zur Zuführung von Druckluft zu den Anlageflächen der Spannbacken an den Grundbacken bzw. zu den Anlageflächen der Spannkassetten an den Grundbacken und/oder den Anlageflächen des einzuspannenden Werkstückes an den Spannbacken bzw. den Spannkassetten in den Futterkörper und/oder den Grundbacken und/oder den Spannkassetten vorzugsweise über einen zentralen Ringkanal mit einer Druckluftquelle verbindbare Druckluftkanäle eingearbeitet sind, die in die Anlageflächen der Grundbacken für die Spannbacken und/oder in deren Anlageflächen für das einzuspannende Werkstück bzw. in die Anlageflächen der Grundbacken für die Spannkassetten und/oder deren Anlageflächen für das einzuspannende Werkstück münden.

Zweckmäßig ist es hierbei, die den Anlageflächen der Spannbacken bzw. der Spannkassetten und/oder des einzuspannenden Werkstückes zugeordneten Druckluftkanäle in ihrem Endbereich achssenkrecht zu der jeweiligen Anlagefläche in diese einmünden zu lassen.

Nach einer andersartigen Ausgestaltung ist es aber auch möglich, die den Anlageflächen der Spannbacken bzw. der Spannkassetten zugeordneten Druckluftkanäle in ihrem Endbereich derart geneigt verlaufend auszubilden, daß die austretende Druckluft auf die jeweilige Spannfläche eines Spannbackens bzw. einer Spannkassette gerichtet ist. An den Spannflächen hängende Schmutzteile und andere Fremdkörper können somit leicht entfernt wreden, so daß die Spannflächen stets sauber sind und Fehleinspannungen vermieden werden.

Angebracht ist es zur Vermeidung von Druckverlusten ferner, die Übergänge der Druckluftkanäle aus dem Futterkörper in die Grundbacken und/oder von den Grundbacken in Aufsatzbacken oder Spannkassetten mittels zumindest in eines dieser Bauteile eingesetzter umlaufender Dichtungen abzudichten.

Um auch bei zueinander verstellbaren Bauteilen eines Kraftspannfutters stets einen zufriedenstellenden Durchlaß für die Druckluft zu schaffen, ist es des weiteren vorteilhaft, die Austrittsöffnung und/oder die Einlaßöffnung der in zwei zueinander verstellbaren Bauteile des Kraftspannfutters angeordneten Druckluftkanäle als sich in Verstellrichtung erstreckendes Langloch, als Schlitz oder als Kegel auszubilden.

Zur raschen und zuverlässigen Einbringung der Druckluft in einen der in den Futterkörper oder die Grundbacken eingearbeiteten Druckluftkanäle oder in den zentralen Ringkanal kann in vorteilhafter Weise ein in einem ortsfesten Bauteil verschiebbar gehaltenes Zustellglied vorgesehen werden, das mit einer oder mehreren Druckluftzuführungsleitungen verbunden und mit dem Futterkörper des Kraftspannfutters luftdicht koppelbar ist.

Das Zustellglied kann hierbei aus einem entgegen der Kraft einer Rückstellfeder achssenkrecht zu dem Futterkörper oder parallel zu dessen Längsachse verschiebbar in einem ortsfesten Halter geführtem Verstellkolben bestehen, der in seinem äußeren Bereich eine von Druckluft beaufschlagbare Druckfläche aufweist und der zentrisch mit einem an die Druckluftzuführungsleitung angeschlossenen Druckluftzuführungskanal versehen ist, der mit einem in der Außenmantelfläche des Futterkörpers eingearbeiteten Kanal anschließbar ist, wobei zur luftdichten Koppelung des Verstellkolbens mit dem Futterkörper in die diesen zugekehrte Stirnfläche des Verstellkolbens eine den in diesen eingearbeiteten Druckluftzuführungskanal umgebende Dichtung eingesetzt sein sollte, die gegen die Außenmantelfläche des Futterkörpers preßbar ist. Außerdem sollte bei achssenkrechter Zustellung des Verstellkolbens die Außenmantelfläche des Futterkörpers mit einer angearbeiteten planen Anlagefläche versehen sein.

Bei einem Kraftspannfutter mit selbsttätig wechselbaren Spannbacken oder Spannkassetten ist es zweckmäßig, die in die Grundbacken eingearbeiteten und in deren Anlageflächen mündenden Druckluftkanäle derart anzuordnen, daß die Druckluftkanäle der Grundbacken bei angekoppelten Spannbacken oder Spannkassetten mit deren Druckluftkanälen kommunizieren.

Des weiteren kann bei einem derartigen Kraftspannfutter zur Überwachung des Betriebszustandes eines in die Spannbacken oder Spannkassetten jeweils eingreifenden Verriegelungsgliedes diesem ein von der Druckluft durchströmter Steuerschieber in Form einer in die Grundbacken eingesetzten Hülse zugeordnet werden, die eine Aufnahmebohrung für einen an dem Verriegelungsglied angebrachten Ansatz aufweist, mittels dem der Druckluftdurchfluß ganz oder teilweise absperrbar ist.

Um die durch die mehr oder weniger strömende Druckluft gegebenen Signale auf einfache Weise auswerten zu können, sollte in die Druckmittelzuführungsleitung des Verstellkolbens ein Strömungswächter oder dgl. eingesetzt sein.

Die gemäß der Erfindung ausgebildete Einrichtung zur Überwachung des Betriebszustandes eines Kraftspannfutters ist nicht nur einfach in der konstruktiven Ausgestaltung und somit auf wirtschaftliche Weise herzustellen, sondern auch äußerst betriebssicher und ermoglicht eine stets zuverlässige Lage-Kontrolle der einzuspannenden Teile in einem Kraftspannfutter. Werden nämlich den Anlageflächen der Spannbacken, der Spannkassetten und/oder des einzuspannenden Werkstückes Druckluft zugeführt, die aus in die Anlageflächen mündenden Druckluftkanälen ausströmt, so ist es möglich, ein dem Betriebszustand des zu überwachenden Teils zugeordnetes Signal zu erhalten, mittels dem erkennbar ist, ob die Werkzeugmaschine, die mit einem erfindungsgemäß ausgebildeten Kraftspannfutter ausgerüstet ist, in Betrieb gesetzt werden darf oder nicht. Die Strömungsgeschwindigkeit der in der Zuführungsleitung strömenden Luft ist hierbei ein Maß dafür, ob ein Spannbacken bzw. eine Spannkassette exakt an einem Grundbacken bzw. ein Werkstück an den Spannbacken bzw. den Spannkassetten anliegt. Mittels eines Strömungswächters können diese Signale ausgewertet werden.

Des weiteren können durch die aus den Anlageflächen der Spannbacken oder der Spannkassetten auströmende Druckluft deren Spannflächen leicht gereinigt werden, durch Verschmutzungen bedingte fehlerhafte Einspannungen werden somit ebenfalls vermieden. Und da die Überwachung der Plananlage jeweils bei Stillstand des Futterkörpers vorgenommen wird, treten auch keine Nebenwirkungen auf, die u. U. auszugleichen sind. Des weiteren ist von Vorteil, daß durch die gemäß der Erfindung ausgebildete Überwachungseinrichtung kein zusätzlicher Bauraum in dem Kraftspannfutter benötigt wird, die Druckluft führenden Kanäle können vielmehr ohne weiteres in dem Futterkörper sowie die Grundbacken eingearbeitet werden, und der Spindeldurchgang des Kraftspannfutters wird durch Zuleitungen nicht beeinträchtigt.

In der Zeichnung sind zwei Ausführungsbeispiele von Kraftspannfuttern, die jeweils mit einer gemäß der Erfindung ausgebildeten Überwachungseinrichtung versehen sind, dargestellt und nachfolgend im einzelnen erläutert. Hierbei zeigen, jeweils in einem Axialschnitt:

Figur 1    ein Kraftspannfutter, bei dem die Plananlage der Spannbacken an den Grundbacken und die Anlage eines Werkstückes an den Spannbacken zu überwachen ist,

Figur 2    ein Kraftspannfutter mit maschinell wechselbaren Spannkassetten, bei dem die Plananlage der einzelnen Teile sowie des einzuspannenden Werkstückes und die Verriegelung der auswechselbaren Spannkassetten zu kontrollieren sind,

Figur 3    das Kraftspannfutter nach Figur 2 während eines Wechselvorganges der Spannkassetten und

Figur 4    das Kraftspannfutter nach Figur 2 mit einer nicht arretierten Spannkassette.

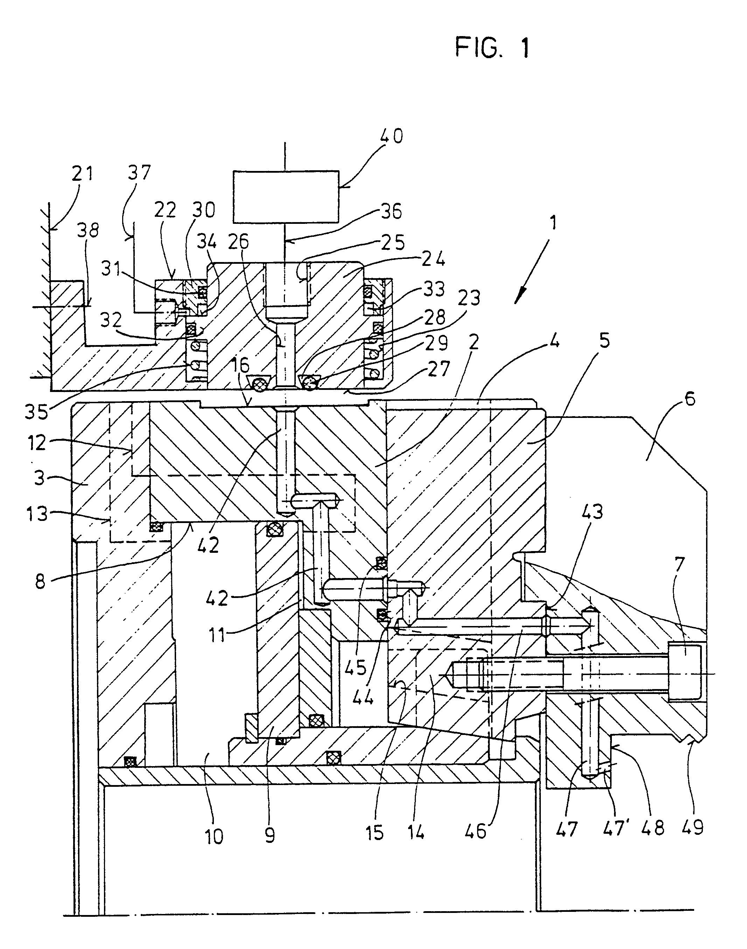

Das in Fig. 1 dargestellte und mit 1 bezeichnete Kraftspannfutter besteht im wesentlichen aus einem Futterkörper 2, der rückseitig durch einen Deckel 3 verschlossen ist, und in radial gerichteten Nuten 4 verschiebbar geführten Grundbacken 5, an denen mittels Schrauben 7 Spannbacken 6 befestigt sind. Die Grundbacken 5 sind durch einen in einem Zylinderraum 8 angeordneten Kolben 9 antreibbar, der über in an den Grundbacken 5 vorgesehenen Keilnuten 15 eingreifende Keilhaken 14 mit desen formschlüssig verbunden ist. Wird über die gestrichelt eingezeichneten Druckmittelzuführungsleitungen 12 oder 13 einem der Druckräume 10 oder 11 Druckmittel zugeführt und somit in diesen ein Druck aufgebaut, so wird der Kolben 9 nach rechts oder links verschoben. Und über die zusammenwirkenden Keilhaken 14 und Keilnuten 15 wird die Axialbewegung des Kolbens 9 in eine Radialbewegung umgelenkt, so daß die Grundbacken 5 und die mit diesen fest verbundenen Spannbacken 6 nach außen oder innen verschoben und demnach ein Werkstück gelöst oder eingespannt wird.

Um feststellen zu können, ob die Spannbacken 6 flächig an den diesen zugeordneten Anlageflächen 43 der Grundbacken 5 und/oder ein einzuspannendes Werkstück an den Anlageflächen 48 der Spannbacken 6 anliegen, sind in den Futterkörper 2 sowie in jeden der Grund- und Spannbacken 5 und 6 eingearbeitete, in die Anlageflächen 43 bzw. 48 mündende Druckluftkanäle 42 bzw. 46 und 47 vorgesehen, die in vorbestimmten Positionen des Futterkörpers 2 jeweils an eine Druckluftquelle anschließbar sind. Damit bei eingesetzten Grundbacken 5 ein seitliches Abströmen der Druckluft ausgeschlossen ist, sind in den Futterkörper 2 den Austritt der Druckluftkanäle 42 jeweils umgebende Nuten 44 eingearbeitet, in denen Dichtungen 45 gehalten sind.

Die Druckluftkanäle 42 münden senkrecht zu den Anlageflächen 43 aus diesen aus, dagegen sind die Druckluftkanäle 47 jeweils mit einem geneigt zu den Anlageflächen 48 verlaufenden Kanalteil 47' versehen, der derart geneigt ist, daß die ausströmende Druckluft auf den Einspannbereich 49 der Spannbacken 6 gerichtet ist. Dadurch ist es möglich, vor dem Einspannen eines Werkstückes den Einspannbereich 49 von Spänen oder anderen Fremdkörpern zu säubern.

Um Druckluft bei Stillstand des Kraftspannfutters 1 in eine der den einzelnen Spannbacken 6 jeweils zugeordneten Druckluftkanäle 42 einzuleiten, ist ein in einem Halter 22, der mittels Schrauben 38 an einer Wand 21 befestigt ist, in einer Bohrung 23 ein Verstellkolben 24 eingesetzt, der mit einem Anschluß 25 für eine anzuschließende Druckmittelzuführungsleitung 36 und einem zentralen Zuführungskanal 26 versehen ist. In der Stirnfläche 27 des Verstellkolbens 24 ist in einer Nut 28 eine Dichtung 29 gehalten, die jeweils gegen eine an den Futterkörper 2 angearbeitete Fläche 16 preßbar ist, so daß in diesem Betriebszustand Druckluft aus dem Zuführungskanal 26 in einen der Kanäle 42 überströmen kann. Selbstverständlich ist es aber auch möglich, in den Futterkörper einen zentrischen Ringkanal einzuarbeiten, an den die einzelnen den Spannbacken zugeordneten Druckluftkanäle anzuschließen sind.

Der Verstellkolben 24 ist mittels eines Ringes 30, in den eine Dichtung 31 eingesetzt ist, durch die Kraft einer Rückstellfeder 35 in der oberen Endlage gehalten. Wird jedoch bei Stillstand des Kraftspannfutters 1 in einer der vorgegebenen Positionen dem Druckraum 33 des Verstellkolbens 24 Druckmittel aus einer Zuführungsleitung 37 zugeleitet und wird somit dessen Druckfläche 34, die durch einen an diesem angeformten ringförmigen Ansatz 32 gebildet ist, beaufschlagt, so wird der Verstellkolben 24 in Richtung des Kraftspannfutters 1 verschoben und mit diesem luftdicht gekoppelt.

Wird in diesem Betriebszustand Druckluft in den Kanal 42 eingelassen, so strömt diese durch die Kanäle 46 und 47 und tritt an der Anlagefläche 48 aus. Die dabei gegebene Strömungsgeschwindigkeit kann in einem in die Druckluftzuführungsleitung 36 eingesetzten Strömungswächter 40 gemessen und gespeichert werden. Liegt nach einem Backenwechsel der eine oder andere der Spannbacken 6 nicht plan an der zugeordneten Anlagefläche 43 an, so strömt durch den gebildeten Spalt eine größere Luftmenge ab, ein Anzeichen dafür, daß der jeweilige Spannbacken nicht exakt mit den Grundbacken verbunden ist.

Da bei einer korrekten Einspannung eines Werkstückes die Druckluftkanäle 47' nahezu luftdicht verschlossen sind und in diesem Betriebszustand somit nur eine sehr geringe Luftmenge durch den Strömungswächter 40 fließt, ist in Abhängigkeit von der Strömungsgeschwindigkeit auch feststellbar, ob das einzuspannende Werkstück plan an den Anlageflächen 48 anliegt. Sobald nämlich eine plane Anlage nicht gegeben ist, strömt eine größere Luftmenge seitlich ab und somit durch den Strömungswächter 40, ein Signal dafür, daß die Werkstückeinspannung zu überprüfen ist und die mit dem Kraftspannfutter 1 ausgerüstete Werkzeugmaschine noch nicht in Betrieb genommen werden kann.

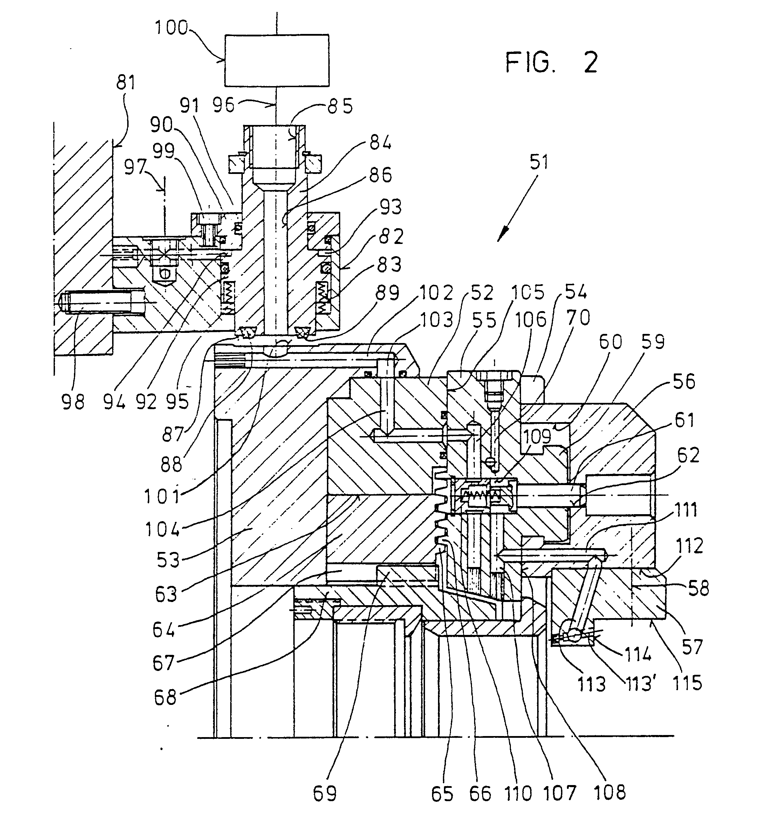

Das in den Fig. 2 bis 4 dargestellte Kraftspannfutter 51 besteht ebenfalls aus einem Futterkörper 52, der rückseitig mit einem Deckel 53 verschlossen ist, und in radial gerichteten Nuten 54 verschiebbar eingesetzten Grundbacken 55, die jeweils durch eine tangential verlaufende in einer Aufnahmetasche 63 angeordnete Keilstange 64 antreibbar sind. Zur Betätigung der Keilstangen 64, die mittels Verzahnungen 65 in an den Grundbacken 55 angebrachten Verzahnungen 66 eingreifen, dient ein axial mit Hilfe einer nicht gezeigten Zugstange verstellbarer Kolben 68, der mit angeformten Keilnasen 69 in die Keilstangen 64 eingearbeiteten Keilnuten 67 in Eingriff ist. Eine Axialverschiebung des Kolbens 68 wird somit über die Keilstangen 64 in eine Radialbewegung der Grundbacken 55 umgelenkt.

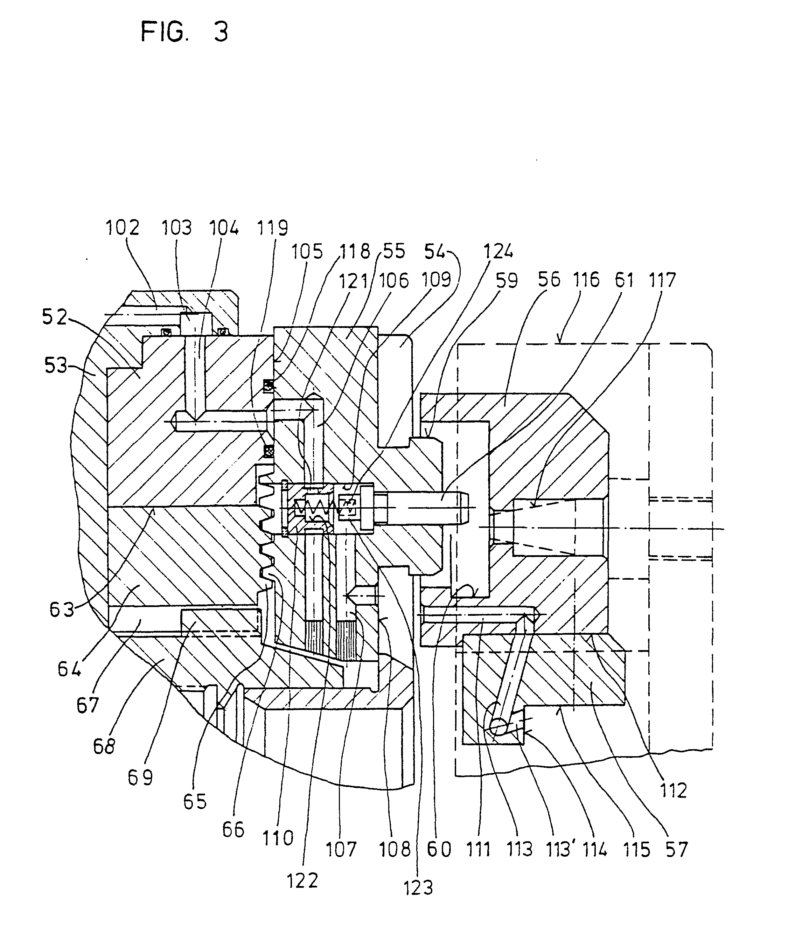

Bei diesem Ausführungsbeispiel sind den Grundbacken 55 maschinell auswechselbare Spannkassetten 56 zugeordnet, an denen mittels Schrauben 58 ebenfalls auswechselbar Spanneinsätze 57 befestigt sind. Um die Spannkassetten 56 auf einfache Weise formschlüssig mit den mit Schmiermittelnuten 70 ausgestatteten Grundbacken 55 zu verbinden, sind diese jeweils mit einem piltförmigen Ansatz 59 ausgestattet und in die Spannkassetten 56 sind Ausnehmungen 60 eingearbeitet, in die die Ansätze 59 einführbar und die mit einer Hinterschneidung versehen sind. Außerdem ist in die Ansätze 59 jeweils ein Verriegelungsstift 61 als Verriegelungsglied eingesetzt, der durch die Kraft einer Druckfeder 124 bei Verrastung der Spannkassetten 56 mit den Grundbacken 55 in eine Bohrung 62 der Spannkassetten 56 einführbar ist. Der Zu- und Abtransport der Spannkassetten 56 wird mittels der in Figur 3 strichpunktiert dargestellten Palette 116 bewerkstelligt.

Um überprüfen zu können, ob eine exakte Anlage der Spannkassetten 56 an den Anlageflächen 108 der Grundbacken 55 bzw. eines einzuspannenden Werkstückes an den Anlageflächen 114 der Spanneinsätze 57 gegeben ist, sind in den Futterkörper 52 sowie die Grundbacken 55 und die Spannkassetten 56 Druckluftkanäle 104, 106 und 107 sowie 111 und 113 bzw. 113' eingearbeitet, die an einen mit Druckluft gespeisten Ringkanal 103 angeschlossen sind und die jeweils in die Anlageflächen 105, 108, 112 und 114 münden. Auch eine Überwachung der korrekten Anlage der Spanneinsätze 57 an den Anlageflächen 112 der Spannkassetten 56 ist bedingt möglich.

Zur Zuführung der Druckluft in den Ringkanal 103 dient wiederum ein in einer Bohrung 83 eines an einer Wand 81 mittels Schrauben 98 befestigten Halters 82 eingesetzter Verstellkolben 84, der einen mit einer Druckluftzuführungsleitung 96 verbindbaren Anschluß 85 sowie einen zentralen Zuführungskanal 86 aufweist. In die dem Futterkörper 52 zugekehrte Stirnfläche 87 des entgegen der Kraft einer Feder 95 bei einer Druckmittelzuführung über eine Leitung 97 in den Druckraum 93 verschiebbaren Verstellkolbens 84 ist in einer Nut 88 eine Dichtung 89 eingesetzt, die sich somit luftdicht an der an dem Futterkörper 2 angearbeiteten ebenen Fläche 101 anlegt. In diesem Betriebszustand kann Druckluft aus der mit einem Strömungswächter 100 ausgestatteten Druckluftzuführungsleitung 96 über Kanäle 86 und 102 in den Ringkanal 103 gelangen. Die Kolbenflächen 94 des Verstellkolbens 84, der durch einen mittels Schrauben 99 an dem Halter 82 befestigten und mit einer Dichtung 91 versehenen Ring 90 abgestützt ist, ist ebenfalls durch einen Ansatz 92 gebildet.

Wird dem Ringkanal 103 Druckluft zugeführt, so ist bei mit den Grundbacken 55 verriegelten Spannkassetten 56, wie dies in Figur 2 dargestellt ist, zu überwachen, ob ein einzuspannendes Werkstück plan an den Anlageflächen 114 der Spanneinsätze 57 anliegt. Da in diesem Fall die Druckluft-Kanäle 113 nahezu luftdicht verschlossen sind, kann diese aufgrund der Strömungsgeschwindigkeit in dem Strömungswächter 100 erkannt werden. Bevor das Werkstück eingespannt wird, werden jedoch durch die ausströmende Druckluft, da die Endbereiche 113' der Druckluftkanäle 113 in Richtung der Einspannbereiche 115 der Spanneinsätze 57 geneigt sind, diese von Fremdkörpern gereinigt.

Beim Wechseln der Spannkassetten 56 kann dagegen deren Plananlage an den Anlageflächen 108 der Grundbacken 55 überwacht werden. Kommunizieren nämlich die Druckluft-Kanäle 107 und 111 nicht vollständig miteinander, so wird die durch diese strömende Druckluft gestaut, so daß diedurch den Strömungswächter 100 fließende Druckluftmenge geringer ist als bei einem korrekten Sitz der Wechselkassetten 56. Dies wiederum stellt ein auswertbares Signal dar.

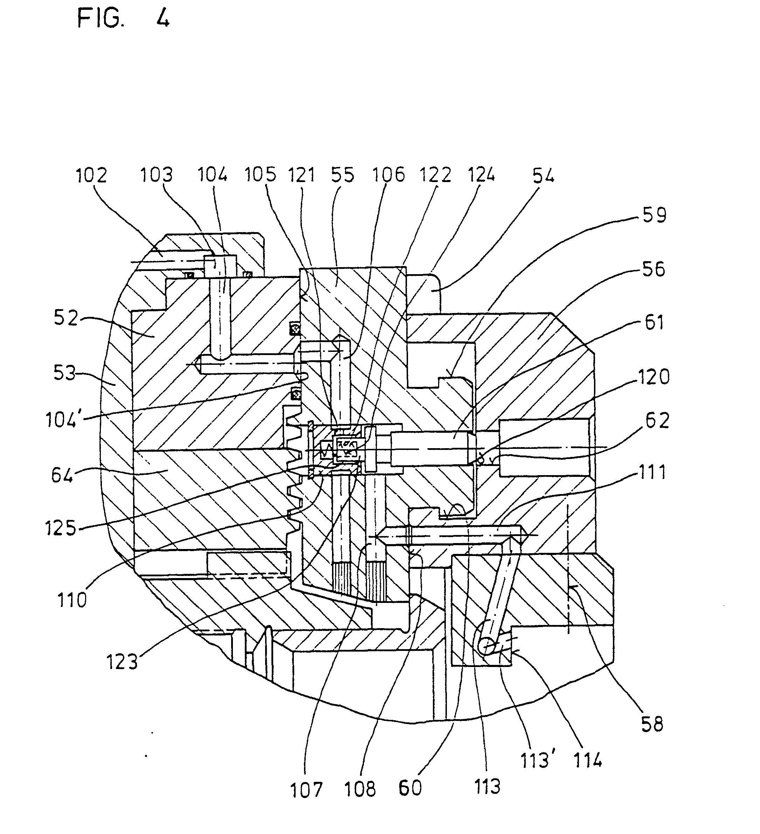

Des weiteren kann auch gemäß der Darstellung in Figur 4 geprüft werden, ob bei mit den Ansätzen 59 der Grundbacken 55 bereits verrasteten Spannkassetten 56 der Verriegelungsbolzen 61 in die diesem zugeordnete Bohrung 62 eingerastet ist. Um dies bewerkstelligen zu können, ist in jeden der Grundbacken 55 in einer Bohrung 109 ein Steuerschieber in Form einer Hülse 110, an der sich die auf den Verriegelungsbolzen 61 einwirkende Druckfeder 124 abstützt, eingesetzt, der einen von der Druckluft durchströmbaren Kanal 121 sowie eine ebenfalls durchströmbare Bohrung 122 aufweist. Und an dem Verriegelungsbolzen 61 ist ein Ansatz 123 angebracht, der in die Bohrung 122 einführbar ist.

Liegen beispielsweise in der Bohrung 62 Späne 120 oder nimmt die Spannkassette 56 keine exakte Lage ein, so ragt der Ansatz 123 des Verriegelungsbolzens 61 in die Bohrung 122 hinein und der Durchfluß der Druckluft durch die Hülse 110 wird ganz oder teilweise, je nachdem, wie groß der Spalt 125 zwischen diesen gewählt wird, abgesperrt. Die Druckluft kann somit nicht aus dem Druckluftkanal 106 in den Druckluftkanal 107 übertreten. Die dabei gegebene Strömungsgeschwindigkeit der Druckluft in der Druckluftzuführungsleitung 96 ist ebenfalls eine auswertbare Kenngröße.

Mittels eines an der Palette 116 angebrachten Stiftes 117 ist bei Entnahme der Spannkassette 56 der Verriegelungsbolzen 61 so weit in den Ansatz 59 zurückzuschieben, daß eine radiale Verstellbewegung der Spannkassette 56 vorgenommen werden kann.

Bei gegeneinander verstellbaren Bauteilen ist es zweckmäßig, die Austrittsöffnungen und/oder die Eintrittsöffnungen der miteinander kommunizierenden Druckluftkanäle in Form eines Langloches, eines Schlitzes oder kegelig auszubilden. In Figur 4 ist stellvertretend die Austrittsöffnung 104' des in den Futterkörper 52 eingearbeiteten Druckluftkanals 104 kegelig gestaltet, um in unterschiedlichen Positionen der Grundbacken 55 stets einen Druckluftübergang sicherzustellen. Des weiteren sind in in den Futterkörper 52 eingearbeiteten, die Druckluftkanäle 104 umgebenden Nuten 118 Dichtungen 119 eingesetzt, um eine korrekte Überleitung der Druckluft in die Grundbacken 55 zu gewährleisten.

**Patentansprüche**

1. Einrichtung zur Überwachung des Betriebszustandes eines Kraftspannfutters (1; 51) bei Stillstand, das einen Futterkörper (2; 52) und in diesen in radial gerichteten Nuten (4; 54) verschiebbar geführte angetriebene Grundbacken (5; 55) aufweist, auf denen Spannbacken (6) befestigt oder Spannkassetten (56) auswechselbar gehalten sind,
<u>dadurch</u> gekennzeichnet,
daß zur Zuführung von Druckluft zu den Anlageflächen (43) der Spannbacken (6) an den Grundbacken (5) bzw. zu den Anlageflächen (108) der Spannkassetten (56) an den Grundbacken (55) und/oder den Anlageflächen (48; 114) des einzuspannenden Werkstückes an den Spannbacken (6) bzw. an den Spannkassetten (56) in den Futterkörper (2; 52) und/oder den Grundbacken (5; 55) und/oder den Spannkassetten (56) vorzugsweise über einen zentralen Ringkanal (103) mit einer Druckluftquelle (Leitung 36; 96) verbindbare Druckluftkanäle (42, 46, 47, 47'; 106, 107, 111, 113, 113') eingearbeitet sind, die in die Anlageflächen (43) der Grundbacken (5) für die Spannbacken (6) und/oder in deren Anlageflächen (48) für das einzuspannende Werkstück bzw. in die Anlageflächen (108) der Grundbacken (55) für die Spannkassetten (56) und/oder deren Anlageflächen (114) für das einzuspannende Werkstück münden.

2. Einrichtung nach Anspruch 1,
<u>dadurch</u> gekennzeichnet,

daß die den Anlageflächen (43, 48; 108, 114) der Spannbacken (6) bzw. der Spannkassetten (56) und/oder des einzuspannenden Werkstückes zugeordneten Druckluftkanäle (46; 111) in ihrem Endbereich achssenkrecht zu der jeweiligen Anlagefläche (43; 108) in diese einmünden.

3. Einrichtung nach Anspruch 1,
dadurch gekennzeichnet,
daß die den Anlageflächen (48; 114) der Spannbacken (6) bzw. der Spannkassetten (56) für das einzuspannende Werkstück zugeordneten Druckluftkanäle (47; 113) in ihrem Endbereich (Teilkanal 47'; 113') derart geneigt verlaufend ausgebildet sind, daß die austretende Druckluft auf die jeweilige Spannfläche (49; 115) eines Spannbackens (6) bzw. einer Spannkassette (56) gerichtet ist.

4. Einrichtung nach einem oder mehreren der Ansprüche 1 bis 3,
dadurch gekennzeichnet,
daß die Übergänge der Druckluftkanäle (42; 104) aus dem Futterkörper (2; 52) in die Grundbacken (5; 55) und/oder von den Grundbacken (55) in Spannbacken oder Spannkassetten (56) mittels zumindest in eines dieser Bauteile eingesetzter umlaufender Dichtungen (45) abgedichtet sind.

5. Einrichtung nach einem oder mehreren der Ansprüche 1 bis 4,
dadurch gekennzeichnet,
daß die Austrittsöffnung und/oder die Einlaßöffnung zweier in zueinander verstellbaren Bauteilen (Futterkörper 52, Grundbacke 55) des Kraftspannfutters (51) angeordneter Druckluftkanäle (104; 106) als sich in Verstellrichtung erstreckendes Langloch (104') als Schlitz oder als Kegel ausgebildet sind.

6. Einrichtung nach einem oder mehreren der Ansprüche 1 bis 5,
dadurch gekennzeichnet,
daß zur Einbringung der Druckluft in einen der in den Futterkörper (2) oder die Grundbacken (5) eingearbeiteten Druckluftkanäle (42) oder in den zentralen Ringkanal (103) ein in einem ortsfesten Bauteil (Halter 22; 82) verschiebbar gehaltenes Zustellglied (Verstellkolben 24; 84) vorgesehen ist, das mit einer oder mehreren Druckluftzuführungsleitungen (36; 96) verbunden und mit dem Futterkörper (2; 52) des Kraftspannfutters (51) luftdicht koppelbar ist.

7. Einrichtung nach Anspruch 6,
dadurch gekennzeichnet,
daß das Zustellglied aus einem entgegen der Kraft einer Rückstellfeder (35; 95) achssenkrecht zu dem Futterkörper (2; 52) oder parallel zu dessen Längsachse verschiebbar in einem ortsfesten Halter (22; 82) geführtem Verstellkolben (24; 84) besteht, der in seinem äußeren Bereich eine von Druckluft beaufschlagbare Druckfläche (34; 94) aufweist und der zentrisch mit einem an die Druckluftzuführungsleitung (36; 96) angeschlossenen Druckluftzuführungskanal (26; 86) versehen ist, der mit einem in den Futterkörper (2; 52) eingearbeiteten Kanal (42; 102) anschließbar ist.

8. Einrichtung nach Anspruch 6 oder 7,
dadurch gekennzeichnet
daß zur luftdichten Koppelung des Verstellkolbens (24; 84) mit dem Futterkörper (2; 52) in die diesen zugekehrte Stirnfläche des Verstellkolbens (24; 84) eine den in diesen eingearbeiteten Druckluftzuführungskanal (36; 96) umgebende Dichtung (29; 89) eingesetzt ist, die gegen die Außenmantelfläche des Futterkörpers (2; 52) preßbar ist.

9. Einrichtung nach einem oder mehreren der Ansprüche 6 bis 8,
dadurch gekennzeichnet,
daß bei achssenkrechter Zustellung des Verstellkolbens (24; 84) die Außenmantelfläche des Futterkörpers (2; 52) mit einer angearbeiteten planen Anlagefläche (16; 101) versehen ist.

10. Einrichtung nach einem oder mehreren der Ansprüche 1 bis 9,
dadurch gekennzeichnet
daß bei einem Kraftspannfutter (51) mit selbsttätig wechselbaren Spannbacken oder Spannkassetten (56) die in die Grundbacken (55) eingearbeiteten und in deren Anlageflächen (108) mündenden Druckluftkanäle (107) derart angeordnet sind, daß die Druckluftkanäle (107) der Grundbacken (55) bei angekoppelten Spannbacken oder Spannkassetten (56) mit deren Druckluftkanälen (111) kommunizieren.

11. Einrichtung nach Anspruch 10,
dadurch gekennzeichnet,
daß zur Überwachung des Betriebszustandes eines in die Spannbacken oder Spannkassetten (56) jeweils eingreifenden Verriegelungsgliedes (61) diesem ein von der Druckluft durchströmter Steuer-schieber (110) in Form einer in die Grundbacken (55) eingesetzten Hülse zugeordnet ist, die eine Aufnahmebohrung (122) für einen an dem Verriegelungsglied (61) angebrachten Ansatz (123) aufweist, mittels dem der Druckluftdurchfluß ganz oder teilweise absperrbar ist.

12. Einrichtung nach einem oder mehreren der Ansprüche 1 bis 11,
dadurch gekennzeichnet,
daß in die Druckluftzuführungsleitung (36; 96) des Verstellkolbens (24; 84) ein Strömungswächter (40; 100) oder dgl. eingesetzt ist.

**Claims**

1. A device for monitoring the operation when stationary of a power chuck (1; 51) comprising a chuck body (2; 52) and driven primary jaws (5; 55) slidably received in slots (4; 54) disposed radially in said chuck body (2; 52) on which fixed jaws are mounted or to which exchangeable clamping jaws (56) are exchangeably attached,
characterized in that
in order to feed compressed air to the locating faces (43) at which the fixed jaws (6) abut against the primary jaws (5) or to the locating faces (108) at which the exchangeable jaws (56) abut against the primary jaws (55) and/or to the locating faces (48; 114) at which the workpiece to be gripped abuts against the fixed jaws (6) or the exchangeable jaws (56), compressed air ducts (42, 46, 47, 47'; 106, 107, 111, 113, 113'), preferably connectable to a compressed air supply (supply line 36; 96) via a central annular duct (103), are formed in the chuck body (2; 52) and/or the primary jaws (5; 55) and/or the exchangeable jaws (56), said compressed air ducts (42, 46, 47, 47'; 106, 107, 111, 113, 113') opening into the locating faces (43) of said primary jaws (5) for the fixed jaws (6) and/or into the locating faces of the fixed jaws (6) for the workpiece, or into the locating faces (108) of the primary jaws (55) for the exchangeable jaws (56) and/or into the locating faces (114) of the exchangeable jaws (56) for the workpiece to be gripped.

2. A device according to Claim 1, characterised in that the compressed air ducts (48; 111) associated with the locating faces (43, 48; 108, 114) of the fixed jaws (6) or the exchangeable jaws (56) and/or the workpiece to be gripped open into their respective locating faces (43; 108) such that the axes of their end portions are disposed perpendicularly thereto.

3. A device according to Claim 1 characterised in that the compressed air ducts (47; 113) associated with the locating faces (48; 114) of the fixed jaws (6) or the exchangeable jaws (56) for the workpiece to be gripped are at their ends (channel portion 47'; 113') arranged at an inclination such that the compressed air emerging therefrom is directed towards the clamping face (49; 115) of the respective fixed jaw (6) or exchangeable jaw (56).

4. A device according to one or more of Claims 1 to 3, characterized in that the points at which the compressed air ducts (42; 104) pass from the chuck body (2; 52) into the primary jaws (5; 55) and/or from the primary jaws (55) into fixed jaws or exchangeable jaws (56) are sealed by encircling seals (45) set into one or more of the aforesaid components.

5. A device according to one or more of Claims 1 to 4, characterized in that the exit aperture and/or the entry aperture of two compressed air ducts (104, 106) formed in components of the power chuck (51) which are mowable relative to each other (chuck body 52, primary jaw 55) are formed as an elongated hole (104') extending in the direction of movement, or as a slot or taper.

6. A device according to one or more of Claims 1 to 5, characterized in that in order to introduce the compressed air into one of the compressed air ducts (42) formed in the chuck body (2) or the primary jaws (5) or into the central annular duct (103), an approach element (movable piston 24; 84) is provided which is slidably mounted in a fixed component (bracket 22; 82) and which is connected to one or more compressed air supply lines (36; 96) and connectable to the chuck body (2; 52) of the power chuck (51) such that an airtight seal is obtained.

7. A device according to Claim 6, characterised in that the approach element comprises a mowable piston (24; 84) mounted in a fixed bracket (22; 82) such that it is slidable against the force of a recoil spring (35; 95) perpendicularly to or in parallel with the longitudinal axis of the chuck body (2; 52), said piston (24; 84) having at its outer portion a pressure face (34; 94) against which compressed air may act and centrally a compressed air supply duct (46; 86) which is connected to the compressed air supply line (36; 96) and connectable to a duct (42; 102) formed in the chuck body (2; 52).

8. A device according to Claim 6 or 7, characterised in that in order to provide an airtight connection of the mowable piston (24; 84) to the chuck body (2; 52), there is, set into the end face of the piston (24; 84) facing the chuck body, a seal (29; 89) which encircles the compressed air duct formed in said piston (24; 84) and which can be pressed against the outer casing face of the chuck body (2; 52).

9. A device according to one or more of Claims 6 to 8, characterised in that in the case of a mowable piston (24; 84) which approaches the chuck perpendicularly to the chuck axis, the outer casing face of the chuck body (2; 52) is provided with a planar locating face (16; 101) formed thereon.

10. A device according to one or more of Claims 1 to 9, characterised in that in the case of a power chuck (51) with automatically exchangeable clamping jaws (56), the compressed air ducts (107) formed in the primary jaws (55) and opening into the locating faces (108) thereof are so arranged that when exchangeable jaws (56) are attached to the primary jaws (55), the compressed air ducts (107) in the primary jaws (55) communicate with the compressed air ducts (111) in the exchangeable jaws (56).

11. A device according to Claim 10, characterized in that in order to monitor the operation of an interlock element (61) which engages with a respective exchangeable clamping jaw (56), said interlock element (61) is associated with a control spool (110) in the form of a bush received in the primary jaws (55), through which the compressed air flows and which comprises a bore (122) to receive an extension (123) attached to the interlock element, by which means the flow of compressed air may be wholly or partially interrupted.

12. A device according to one or more of Claims 1 to 11, characterised in that

a flow monitoring device (40; 100) or similar is incorporated in the compressed air supply line (36; 96) to the mowable piston (24; 84).

**Revendications**

1. Dispositif de surveillance de l'état d'un mandrin de serrage (1; 51) à l'arrêt, qui présente un corps (2; 52) et, à l'intérieur de celui-ci, des mâchoires de base entraînées (5; 55) guidées dans des gorges orientées radialement (4; 54), sur lesquelles sont fixées des mâchoires de serrage (6) ou maintenues des cassettes de serrage interchangeables (56),
   caractérisé par le fait
   que pour l'arrivée d'air comprimé aux portées (43) des mâchoires de serrage (6) sont taillés des canaux d'air comprimé reliables (42, 46, 47, 47'; 106, 107, 111, 113, 113') dans les mâchoires de base (5) resp. aux portées (108) des cassettes de serrage (56) dans les mâchoires de base (55) et/ou les portées (48; 114) de la pièce à serrer aux mâchoires de serrage (6) resp. aux cassettes de serrage (56) dans le corps (2; 52) du mandrin et/ou dans les mâchoires de base (15; 55) et/ou les cassettes de serrage (56), de preférence par l'intermédiaire d'un canal annulaire central (103) avec une source d'air comprimé (conduites 36; 96), lesquels canaux débouchent dans les portées (43) des mâchoires de base (5) pour les mâchoires de serrage (6) et/ou dans leurs portées (48) pur la pièce à serre resp. dans les portées (108) des mâchoires de base (55) pour les cassettes de serrage (56) et/ou leurs portées (114) pour la pièce à serrer.

2. Dispositif selon spécification 1,
   caractérisé par le fait
   que les canaux d'air comprimé affectés aux portées (43, 48; 108, 114) des mâchoires de serrage (6) resp. les cassettes de serrage (56) et/ou de la pièce à serrer débouchent verticalement dans chaque portée (43; 108).

3. Dispositif selon spécification 1,
   caractérisé par le fait
   que les canaux d'air comprimé (47; 113) affectés aux portées (48; 114) des mâchoires de serrage (6) resp. les cassettes de serrage (56) pour la pièce à serrer affectent une extrémité (canal partiel 47'; 113') inclinée de telle sorte que l'air comprimé qui s'echappe est dirigé sur chaque plan de serrage (49; 115) d'une mâchoire de serrage (6) resp. d'une cassette de serrage (56).

4. Dispositif selon une ou plusieurs des spécifications de 1 à 3
   caractérisé par le fait
   que les transitions des canaux d'air comprimé (42, 104) entre le corps de mandrin et les mâchoires de base et/ou les mâchoires de base (55) dans les mâchoires de serrage ou les cassettes de serrage (56) sont rendues étanches par l'intermédiaire de joints (45) installés au moins dans l'un de ces éléments.

5. Dispositif selon une ou plusieurs des spécifications de 1 à 4
   caractérisé par le fait
   que l'ouverture de sortie et/ou l'ouverture d'admission de deux canaux d'air comprimé (104, 106) disposés dans des éléments réglables l'un par rapport à l'autre (corps de mandrin 52, mâchoire de base 55) du mandrin de serrage (51) affectent la configuration d'un trou oblong (104) s'étendant dans le sens du réglage, sous forme de fente ou de cône.

6. Dispositif selon une ou plusieurs des spécifications de 1 à 5
   caractérisé par le fait
   qu'un élément de fermeture (piston de réglage 24; 84) déplaçable dans un élément fixe (support 22; 82) est prévu afin d'envoyer l'air comprimé dans l'un des canaux d'air comprimé (42) taillés dans le corps du mandrin (2) ou dans les mâchoires de base (5) ou dans le canal annulaire central (103), lequel élément de fermeture est relié à une ou plusieurs conduites d'alimentation à air comprimé (36; 96) et peut être accouplé, étanche à l'air, avec le corps (2; 52) du mandrin de serrage (51).

7. Dispositif selon spécification 6,
   caractérisé par le fait
   que l'élément de fermeture est constitué d'un piston de réglage (24; 84) logé dans un support fixe (22; 82) et se déplaçant en s'opposant à la force d'un ressort de rappel (35; 95) verticalement par rapport au corps du mandrin (2; 52) ou parallèlement à son axe longitudinal, lequel piston comporte extérieurement une surface de pression (34; 94) recevant l'air comprimé et doté, centriquement, d'un canal d'admission d'air comprimé (26; 86) relié à la conduite d'admission d'air comprimé (36; 96), lequel canal peut être relié à un canal (42; 102) taillé dans le corps du mandrin (2; 52)

8. Dispositif selon spécification 6 ou 7
   caractérisé par le fait
   que pour elire de manière étanche à l'air le piston réglable (24; 84) au corps de mandrin (2; 52) est installé un joint circulaire (29; 89) dans la face frontale opposée à ce dernier du piston de réglage (24; 84) et qui entoure le canal d'admission d'air comprimé (36; 96) taillé dans celui-ci, lequel joint peut être pressé contre l'enveloppe extérieure du corps du mandrin (2; 52).

9. Dispositif selon une ou plusieurs des spécifications de 6 à 8
   caractérisé par le fait
   que, dans le cas ou le piston de réglage (24; 84) se déplace perpendiculairement à l'axe, l'enveloppe extérieure du corps de mandrin (2; 52) est pourvue d'une portée (16; 101) plane.

10. Dispositif selon une ou plusiers des spécifications de 1 à 9
   caractérisé par le fait
   que les canaux d'air comprimé (107) taillés dans les mâchoires de base (55) et débouchant dans leurs portées (108) d'un mandrin de serrage (51) avec mâchoires de serrage ou cassettes de serrage (56) interchangeables automatiquement sont disposés de telle sorte que les canaux d'air comprimé (107) des mâchoires de base (55) communiquent avec leurs canaux d'air comprimé (111) lorsque les mâchoires de serrage ou les cassettes de serrage (56) sont accouplées.

11. Dispositif selon spécification 10 caractérisé par le fait qu'en vue de la surveillance de l'état de fonctionnement d'un élément de verrouillage (61) prenant dans les mâchoires de serrage ou les cassettes de serrage (56) est affecté à celui-ci un tiroir de commande (110) traversé par l'air comprimé sous forme d'une douille introduite dans les mâchoires de base (55), qui comportent un orifice de reprise (122) pour un talon (123) disposé sur l'élément de verrouillage (61), qui se verrouille partiellement ou intégralement par l'intermédiaire du flux d'air comprimé.

12. Dispositif selon une ou plusieurs des spécifications de 1 à 11 caractérisé par le fait qu'un débitmètre (40; 100) ou un dispositif semblable est installé dans la conduite d'admission d'air comprimé (36, 96) du piston de réglage (24; 94).

FIG. 1

FIG. 2

# FIG. 3

FIG. 4